# EUROPEAN PATENT SPECIFICATION

(11) **EP 2 745 593 B1**
(45) Date of publication and mention of the grant of the patent: **11.11.2020**
(21) Application number: 11745959.4
(22) Date of filing: 15.08.2011
(51) Int. Cl.: H04W 72/12

(54) **SCHEDULING COMMUNICATIONS**
KOMMUNIKATIONSPLANUNG
PLANIFICATION DE COMMUNICATIONS

(43) Date of publication of application: 25.06.2014
(73) Proprietor: Nokia Solutions and Networks Oy, 02610 Espoo (FI)
(72) Inventor: LUNTTILA, Timo Erkki, FI-02200 Espoo (FI); TIIROLA, Esa Tapani, FI-90450 Kempele (FI); HOOLI, Kari Juhani, FI-90540 Oulu (FI); PAJUKOSKI, Kari Pekka, FI-90240 Oulu (FI)
(74) Representative: Nokia EPO representatives
(86) International application number: PCT/EP2011/064020
(87) International publication number: WO 2013/023684

(56) References cited:
- EP-A1- 2 673 911
- WO-A1-2007/044414
- WO-A2-2008/038088
- US-A1- 2010 027 446
- "3rd Generation Partnership Project; Technical Specification Group Radio Access Network; Evolved Universal Terrestrial Radio Access (E-UTRA); Multiplexing and channel coding (Release 10)", 3GPP STANDARD; 3GPP TS 36.212, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V10.1.0, 29 March 2011 (2011-03-29), pages 1-76, XP050476522, [retrieved on 2011-03-29]

## Description

This disclosure relates to scheduling of communications, and more particularly, to communication of information regarding scheduling by a controller of a wireless communication system.

A communication system can be seen as a facility that enables communication sessions between two or more nodes such as fixed or mobile devices, machine-type terminals, access nodes such as base stations, servers and so on. A communication system and compatible communicating entities typically operate in accordance with a given standard or specification which sets out what the various entities associated with the system are permitted to do and how that should be achieved. For example, the standards, specifications and related protocols can define the manner how devices shall communicate with access nodes, how various aspects of communications shall be implemented and how devices for use in the system shall be configured.

Communications can be carried on wired or wireless carriers. Examples of wireless systems include public land mobile networks (PLMN) such as cellular networks, satellite based communication systems and different wireless local networks, for example wireless local area networks (WLAN). An example of wireless communication systems are architectures standardized by the 3rd Generation Partnership Project (3GPP). A latest 3GPP based development is often referred to as the long-term evolution (LTE) of the Universal Mobile Telecommunications System (UMTS) radio-access technology. The various development stages of the 3GPP LTE specifications are referred to as releases.

A user can access the communication system by means of an appropriate communication device. A communication device of a user is often referred to as user equipment (UE) or terminal. A communication device is provided with an appropriate signal receiving and transmitting arrangement for enabling communications with other parties. Typically a device such as a user equipment is used for enabling receiving and transmission of communications such as speech and content data. In wireless systems a communication device provides a transceiver station that can communicate with another communication device such as e.g. a base station of an access network and/or another user equipment. The communication device may access a carrier provided by a base station, and transmit and/or receive communications on the carrier. The two directions of communications between a base station and communication devices of users have been conventionally referred to as downlink and uplink. Downlink (DL) is commonly understood to refer to the direction from the base station to the communication device and uplink (UL) to the direction from the communication device to the base station.

In communication systems such as the LTE resources allocations for the downlink and the uplink are handled independently. Information entities known as downlink (DL) assignments are used to indicate e.g. on which resources there is DL data to be transmitted to the user equipment (UE) and how the data is encoded. Correspondingly, uplink (UL) assignments or grants sent to the user equipment (UE) are used to inform the user equipment of resources and parameters the UE shall use to transmit data.

Transmission of the scheduling information for downlink and uplink transmissions causes scheduling overhead. Some uplink signals can be persistently allocated and thus no uplink grant is needed for these. Examples of these include periodic channel state information (CSI) including e.g. channel quality indicator (CQI), rank indicator (RI) and/or precoding matrix indicator (PMI), Scheduling Request, Physical Random Access Channel (PRACH), and persistent ACK/NACK. Small data packets, for example Transmission Control Protocol (TCP) acknowledgements (ACK/NACKs), however do not fit particularly well into a persistent or semi-persistent scheduling framework, and uplink scheduling for such transmissions may cause relatively high overhead, in particular if considering the amount of data transmitted. Another example of similar small scale data transmissions is aperiodic channel state information (CSI) reporting which is triggered with a bit (or bits) in an uplink (UL) grant.

Increased utilization of LTE for various scenarios and different data traffic types may increase the desire to optimize the system further for a large number of users. Smart phones as well as machine-like terminals employing machine type communications including e.g. vending machines, smart meters and so on are envisioned to create a lot of transmissions of small data packets. However, the data traffic of such devices is not expected to be very deterministic unlike in e.g. in more conventional voice applications. Therefore semi-persistent scheduling may not provide an appropriate solution for scheduling overhead reductions in such scenarios.

Another aspect of increasing importance is a desire for precise downlink channel state information (CSI) feedback, alleviated by especially coordinated multipoint transmission, but also by DL multiple input multiple output (MIMO) and carrier aggregation enhancements. In LTE Release 10 CSI reports larger than eleven bits are conveyed by means of a physical uplink shared channel (PUSCH) and aperiodic CSI reporting. In LTE aperiodic CSI reporting eNodeB can request a user equipment to measure and transmit a CSI report on PUSCH by sending on PDCCH an uplink grant with an aperiodic CSI trigger bit or bits toggled. However, in the absence of frequent data traffic on the uplink this kind of operation may create relatively high PDCCH overhead.

International Patent Application number WO 2007/044414 discloses a method and system for providing control information for supporting high speed data transmission. A Node-B assigns at least one downlink control channel and at least one uplink control channel to a wireless transmit/receive unit (WTRU). The downlink control channel and the uplink control channel are provided to carry control information for both the downlink and the uplink data transmission. Conventional control channels for HSDPA and HSUPA are combined into a reduced set of control channels for uplink and downlink. The Node-B and the WTRU communication control information via the reduced set of downlink control and the uplink control channels. The WTRU receives downlink data and transmits uplink data, and the Node-B receives uplink data and transmits downlink data based on the control information transmitted via the reduced set of downlink control and the uplink control channels.

International Patent Application number WO 2008/038088 discloses a method for allocating resources in the uplink for ACK/NACK. There are two methods described that may be used to schedule the ACK/NACKs. Firstly, a downlink transmission may include a resource allocation table, which includes uplink resource allocations for the different UEs. Secondly, the UEs may use the allocation order in the downlink to self-assign resources within an uplink signalling space.

There is a general desire for improved scheduling efficiency. In particular, reduction in overhead may be desired. It might be desired in certain applications to reduce downlink control signalling overhead caused by uplink scheduling. Optimization of signalling on physical downlink control channel (PDCCH) could be of particular advantage.

According to an aspect, there is provided a method for controlling communications in an uplink direction according to claim 1.

According to an aspect there is provided a method for controlling communications in an uplink direction according to claim 2.

According to an aspect there is provided an apparatus for controlling communications in an uplink direction according to claim 8.

According to an aspect there is provided an apparatus for controlling communications in an uplink direction according to claim 10.

In accordance with a more detailed embodiment the downlink assignment comprises information regarding uplink scheduling and at least one parameter required by the device for receiving data on the downlink and sending data on the uplink. In accordance with an embodiment the downlink assignment is communicated on a physical downlink control channel. Use of physical uplink shared channel and/or physical uplink control channel resources may be controlled based on the downlink assignment.

Resources according to a predetermined configuration may be allocated in the uplink direction by means of a downlink assignment. At least one resource allocation parameter related to transmission in the uplink direction may be derived from the resource allocation for the downlink direction and/or from resource allocation for sounding reference symbols. Power control on physical uplink shared channel may be provided based on power control of physical uplink control channel.

The data transmission may comprise transmission of modulated data and reference signal and, if present, error correction information. The modulated data may comprise a channel state information report.

Transmission resources may be controlled based on the downlink assignment by applying at least a part of control information for the downlink direction as such to the uplink direction.

Switching between modes can be provided. In a first mode transmissions in the uplink direction are controlled based on the downlink assignment and in a second mode only the downlink direction is controlled based on the downlink assignment. Switching between different modes may be based on detection of presence of scheduling information for the uplink direction in the assignment and/or based on radio resource control signalling or medium access control signalling.

The configuring of data transmission may comprise configuring based on information of at least one of modulation and coding scheme, transport block size, resource block assignment, precoding, reference signal assignment, hybrid automatic repeat request (HARQ) process, redundancy version, shared channel timing, a channel state information report, padding bits, and a flag indicative of grant in the uplink direction.

A node such as a base station or a communication device of a user of machine type terminal can be configured to operate in accordance with the various embodiments.

A computer program comprising program code means adapted to perform the methods is also provided in claim 14. It should be appreciated that any feature of any aspect may be combined with any other feature of any other aspect.

Embodiments will now be described in further detail, by way of example only, with reference to the following examples and accompanying drawings, in which:
Figure 1 shows a schematic diagram of a communication system comprising a base station and a plurality of communication devices;
Figure 2 shows a schematic diagram of a mobile communication device according to some embodiments;
Figure 3 shows a schematic diagram of a control apparatus according to some embodiments;
Figure 4 shows a flowchart according to an embodiment;
Figure 5 shows uplink and downlink frames where data is communicated in accordance with an embodiment; and
Figure 6 shows a flowchart according to an embodiment.

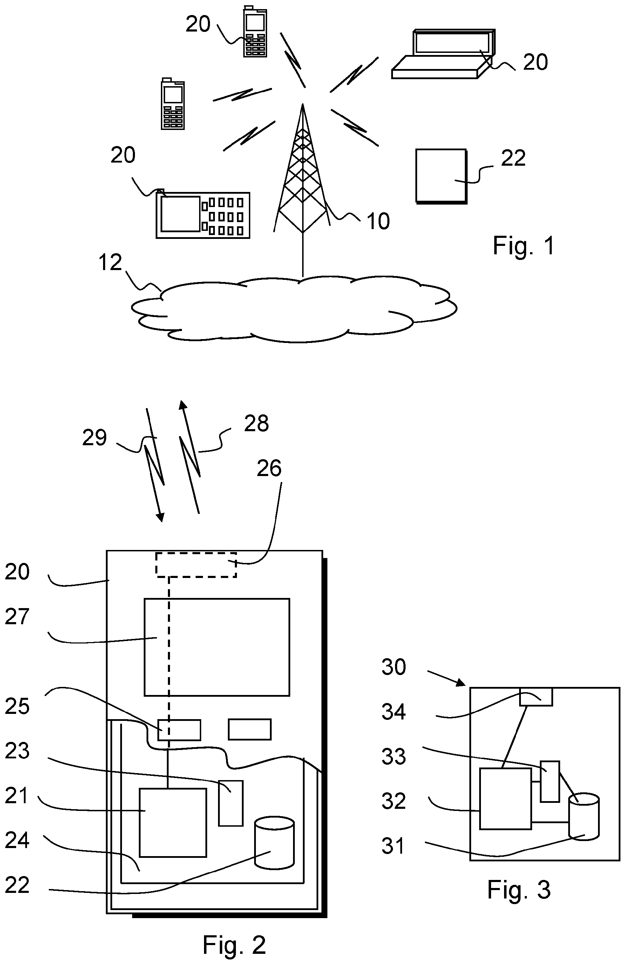

In the following certain exemplifying embodiments are explained with reference to a wireless or mobile communication system serving mobile communication devices. Before explaining in detail the exemplifying embodiments, certain general principles of a wireless communication system, access systems thereof, and mobile communication devices are briefly explained with reference to Figures 1 to 3 to assist in understanding the technology underlying the described examples.

A non-limiting example of the recent developments in communication system architectures is the long-term evolution (LTE) of the Universal Mobile Telecommunications System (UMTS) that is being standardized by the 3rd Generation Partnership Project (3GPP). The LTE employs a mobile architecture known as the Evolved Universal Terrestrial Radio Access Network (E-UTRAN). Base stations of such systems are known as evolved or enhanced Node Bs (eNBs) and may provide E-UTRAN features such as user plane Radio Link Control/Medium Access Control/Physical layer protocol (RLC/MAC/PHY) and control plane Radio Resource Control (RRC) protocol terminations towards the communication devices. Other examples of radio access system include those provided by base stations of systems that are based on technologies such as wireless local area network (WLAN) and/or WiMax (Worldwide Interoperability for Microwave Access).

A device capable of wireless communications can be provided wireless access via at least one base station or similar wireless transmitter and/or receiver node of an access system. In figure 1 a base station 10 is shown to be serving mobile devices 20 and a machine-like terminal 22. Each device and base station may have one or more radio channels open at the same time and may send signals to and/or receive signals from more than one source. As a plurality of devices can use the same wireless resource, transmissions thereof need to be scheduled by a controller of the base station. Base stations are typically controlled by at least one appropriate controller apparatus so as to enable operation thereof and management of mobile communication devices in communication with the base stations. The control apparatus can be interconnected with other control entities. The control apparatus and functions may be distributed between a plurality of control units. In some embodiments, each base station can comprise a control apparatus. In alternative embodiments, two or more base stations may share a control apparatus. For example, currently the LTE does not have a separate radio network controller. In some embodiments the control apparatus may be respectively provided in each base station. The base station can be connected further to a broader communications system 12. Is shall be understood that a number of neighbouring and/or overlapping access systems or radio service areas provided by a number of base stations may exist. A base station site can provide one or more cells or sectors, each sector providing a cell or a subarea of a cell.

A possible mobile communication device for transmitting in uplink and receiving in downlink will now be described in more detail with reference to Figure 2 showing a schematic, partially sectioned view of a communication device 20. Such a communication device is often referred to as user equipment (UE) or terminal. An appropriate communication device may be provided by any device capable of sending radio signals to and/or receiving radio signals. Non-limiting examples include a mobile station (MS) such as a mobile phone or what is known as a 'smart phone', a portable computer provided with a wireless interface card or other wireless interface facility, personal data assistant (PDA) provided with wireless communication capabilities, or any combinations of these or the like. A mobile communication device may provide, for example, communication of data for carrying communications such as voice, electronic mail (email), text message, multimedia and so on. Users may thus be offered and provided numerous services via their communication devices. Non-limiting examples of these services include two-way or multi-way calls, data communication or multimedia services or simply an access to a data communications network system, such as the Internet. Non-limiting examples of content data include downloads, television and radio programs, videos, advertisements, various alerts and other information.

The device 20 is configured to receive signals in the downlink 29 over an air interface via appropriate apparatus for receiving and to transmit signals in the uplink 28 via appropriate apparatus for transmitting radio signals. In Figure 2 the transceiver apparatus is designated schematically by block 26. The transceiver apparatus 26 may be provided for example by means of a radio part and associated antenna arrangement. The antenna arrangement may be arranged internally or externally to the mobile device.

A mobile communication device is also provided with at least one data processing entity 21, at least one memory 22 and other possible components 23 for use in software and hardware aided execution of tasks it is designed to perform, including control of access to and communications with base stations and/or other communication devices. The data processing, storage and other relevant apparatus can be provided on an appropriate circuit board and/or in chipsets. This apparatus is denoted by reference 24.

The user may control the operation of the mobile device by means of a suitable user interface such as key pad 25, voice commands, touch sensitive screen or pad, combinations thereof or the like. A display 27, a speaker and a microphone can be also provided. Furthermore, a communication device may comprise appropriate connectors (either wired or wireless) to other devices and/or for connecting external accessories, for example hands-free equipment, thereto.

Figure 3 shows an example of a control apparatus 30 for a communication system, for example to be coupled to and/or for controlling a base station. In some embodiments a base station may comprise an integrated control apparatus and some other embodiments the control apparatus can be provided by a separate network element. The control apparatus 30 can be arranged to provide control on communications in the service area of at least one base station. The control apparatus 30 can be configured to provide control functions in association with scheduling of downlink and uplink in accordance with embodiments described below. For this purpose the control apparatus can comprise at least one memory 31, at least one data processing unit 32, 33 and an input/output interface 34. Via the interface the control apparatus can be coupled to a base station to cause operation of the base station in accordance with the below described embodiments. The control apparatus can be configured to execute an appropriate software code to provide the control functions.

A wireless communication device, such as a mobile device, machine-Ike terminal or a base station, can be provided with a Multiple Input / Multiple Output (MIMO) antenna system. MIMO arrangements as such are known. MIMO systems use multiple antennas at the transmitter and receiver along with advanced digital signal processing to improve link quality and capacity. For example, the transceiver apparatus 26 of Figure 2 can provide a plurality of antenna ports. More data can be received and/or sent where there are more antennae elements.

It is noted that although the embodiment are described with references to uplink and downlink, this disclosure is not limited by these directions. Instead, the invention is applicable to any system where a control apparatus can schedule transmissions in two directions between two or more communicating entities.

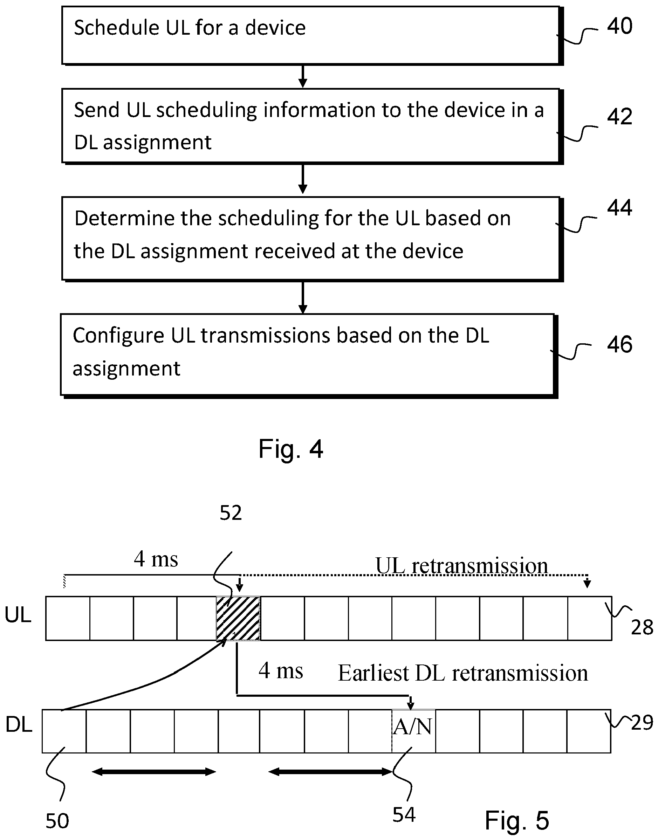

Certain embodiments will now be described in more detail. In the method illustrated by the flow chart of Figure 4 scheduling is determined at 40 by a control apparatus configured for controlling the scheduling for at least one device for communications in a first direction. The first direction in the example of Figure 4 is the uplink 28 of Figure 2. Information relating to the scheduling is then sent at 42 in at least one assignment associated with a second direction to the at least one device. The second direction in the example of Figure 4 is the downlink 29 of Figure 2. A communication device then receives at 44 the assignment associated with the second direction and determines there from information relating to the scheduling in the first direction. Configuration of transmission of data by the device in the first direction is controlled at 46 based on information included in the assignment associated with the second direction.

In accordance with a more detailed embodiment the assignment comprises a downlink assignment comprising information regarding uplink scheduling and/or parameters required by the device for receiving data on the downlink and sending data on the uplink.

In accordance with an embodiment a mechanism to schedule dynamically uplink (UL) data and/or control signals without a need to transmit a UL grant to a device on a physical downlink control channel (PDCCH) is provided. More specifically, a DL assignment can be used to trigger also a physical uplink shared channel (PUSCH) or physical uplink control channel transmission. For the simplicity of differentiating the combined assignment in this presentation, such a PDCCH is called below as a Super-PDCCH (S-PDCCH). The S-PDCCH may be implemented for example by adding a new bit / new bits into a current LTE DL assignment and/or by re-using some of the existing fields of a LTE DL assignment with potentially some additional RRC configuration.

For example, an assignment can be provided by a S-PDCCH that corresponds substantially to a new Downlink Control Information (DCI) format design and operate for example on a LTE Release 8 in the manner of a distributed PDCCH. An option is to provide a S-PDCCH that corresponds substantially to the frequency localized and pre-coded ePDCCH as standardized in LTE Release 11. The S-PDCCH may indicate parameters necessary to receive downlink shared channel (DL-SCH) data in DL subframe n, and parameters necessary to grant the user equipment to send uplink shared channel (UL-SCH) data and/or aperiodic channel state information (CSI) report in UL subframe n+k. Moreover, the S-PDCCH may also trigger transmission on physical uplink control channel (PUCCH). For example, in Frequency Division Duplex (FDD) based systems, k is typically 4. The parameters can be applied based on the predefined radio resource control (RRC) configuration.

An example of this, including the UL/DL timing relating to S-PDCCH, PDSCH, PUSCH scheduling, UL ACK/NACK (Acknowledgement/Negative ACK; A/N) and DL A/N is shown in Figure 5. A downlink assignment in subframe 50 on enhanced control channel on the downlink 29 can be used to reserve both PUSCH and A/N resources in a subframe 52 of the uplink 28. The three subframes following subframe 50 including the DL assignment may be provided for the communication device for processing prior it sends at subframe 52 the PUSCH and A/N related to a physical downlink shared channel (PDSCH). After sending of subframe 52, another 3 subframes may be allowed for the control apparatus at the network side for processing prior it an A/N is send back at subframe 54, the A/N relating to the PUSCH received at subframe 52.

In accordance with an embodiment an indication of the uplink (UL) scheduling is included into a downlink (DL) assignment. The indication can be provided by a specific flag, for example a bit indicating that an UL grant is included and that the values of some other bits need to be interpreted differently from a "normal" DL assignment. According to a possibility the indication is provided by the presence of UL scheduling information. In here the device is configured to detect from the information content of the DL assignment that the assignment contains also an UL grant.

In accordance with a possibility the UL signals to be scheduled include modulated data for aperiodic channel state information (CSI) transmission. In this scenario a relatively simple mechanism can be provided as the payload data in the uplink can be considered as being relatively constant and can thus a predefined resource allocation and modulation and coding scheme (MCS) can be used. Also, fields such as new data indicator (NDI), redundancy version, and so on are not necessary. Instead of simply acting as a trigger for uplink signalling where no link adaptation and only a relatively small and constant payload may be transmitted the downlink assignment contains information of scheduling by a control apparatus enabling operations such as link adaptation and transmission of data. The DL assignment can be used to deliver the UL grant with at least some dynamic resource allocation. The resource allocation can be provided without adding an excessive number of bits, for example a full UL grant, into a DL assignment.

In accordance with another embodiment the scheduled uplink signals can include any uplink data. This may be limited to first transmissions only. In this case there is no need to signal information such as the NDI and redundancy version.

The link adaptation of an UL that is scheduled using downlink assignment can be based at least on the PUSCH power control. It is also possible to provide at least a limited MCS and/or resource allocation size adaptation. Current LTE DL grants contain bits for PUCCH power control commands (TPC). According to an embodiment PUCCH power control bits are be applied for PUSCH power control as such. On the other hand, these bits are not always necessary when transmitting A/N on a physical uplink shared channel (PUSCH). A/N bit(s) can be provided when transmitting PUSCH based on S-PDCCH, if needed. For example, the A/N bits can be transmitted at uplink subframe 52 in Figure 5. Multiplexing with PUSCH data can be applied to the uplink and use of a physical uplink control channel (PUCCH) can be avoided.

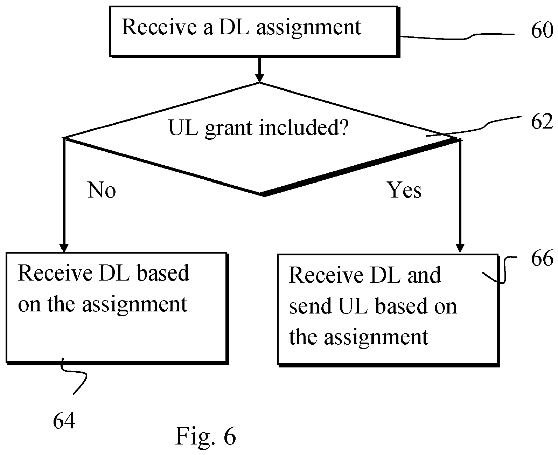

A device can be configured to switch between different modes where the power control information is applied differently. An example of this is illustrated by Figure 6. As shown, at 60 a downlink assignment is received where after it is determined at 62 whether the assignment includes also an UL grant. The device is then switched accordingly to either provide DL operations only based on the DL assignment at 64 or to provide both DL and UL operations at 66 based on the DL assignment.

The switching of a feature enabling uplink scheduling based on downlink assignments can be made on per UE basis. For example, bits for PUCCH transmit power control (TPC) can be used for PUCCH when the DL assignment does not schedule UL transmission, and the bits can be used for PUSCH TPC when the DL assignment schedules also for UL transmission. The switching may be based on detection that the downlink assignment comprises information about scheduling for the uplink. Higher layer configuration (e.g. RRC or MAC signaling) can also be used to enable switching between the different TPC-bit interpretations. For example, there can be e.g. two sets of RRC-configured parameters (PRBs, MCS/TBS and so on) and the TPC bit/bits can be used to indicate which set is applied at a given time instance.

The resource allocation (PRBs, MCS/TBS) for the UL data may be either the same as for the DL (assuming localized e.g. RA), or predefined (e.g. RRC configured PRBs and MCS/TBS). Furthermore, the resource allocation for the UL data may also be at least partially the same (e.g. same PRBs) as for Aperiodic Sounding Reference Signals. Further bit-level implementation possibilities are considered in the following.

New bits can be added into a current downlink assignment. This can be particularly the case if an aim of the joint DL assignment and UL grant is to address the needs of a particular application rather than modifying for example the existing Downlink Control Information (DCI) format as defined by 3GPP technical specification TS 36.212 version 10.2.0. Adding new bit provides considerable freedom in adding the relevant UL fields. Bits to be added into a DL assignment may include bits for information such as uplink modulation and coding scheme and transport block size (UL MCS/TBS), resource block assignment (i.e., starting position, number of PRBs), reference signal assignment (cyclic shift), hybrid automatic repeat request (HARQ) process information and redundancy version (e.g., UL NDI), PUSCH timing related information, and a trigger for an indicator such as channel quality indicator / precoding matrix indicator / rank Indicator (CQI/PMI/RI) transmitted on the PUCCH.

Blind decoding complexity can be optimised when adding new bits into the DL assignment to avoid problems caused by new Downlink Control Information (DCI) size options to avoid unnecessarily increasing the number of blind decoding and also the probability of false positive decoding. An approach is to match the size of the assignment with the size of DCI format corresponding to PDSCH transmission mode configured by eNB (e.g., DCI Format 1/1B/1D/2/2A). For example, an assignment can allocate a predetermined DL resource e.g., PDSCH corresponding to DCI Format 1A (i.e., according to compact DL grant). The remaining bits of DCI Format 1/1B/1D/2/2A can be used to indicate the desired parameters of UL grant, as discussed above. Additional padding bits may also be used for the existing DCI Format 1/1B/1D/2/2A to make sufficient room for the UL resource allocation. A flag may be provided in the assignment which differentiates "normal" PDCCH and a S-PDCCH or similar assignment of described herein. According to a possibility the allocated UL resource can always correspond to a single antenna port mode. This can be also so when UE has been configured for single user MIMO (SU-MIMO) mode.

A communication device may be configured to start decoding the predefined S-PDCCH size option instead of existing DCI Format 1/1B/1D/2/2A. This can be provided for example by means of RRC configuration.

In accordance with another option existing bits of a DCI format, for example as defined by 3GPP technical specification TS 36.212 version 10.2.0, may be reused in the DL assignment. A benefit of this option is that the size of the DCI format can be aligned with the existing sizes and therefore the amount of blind decoding by the user equipment in not changed. This, however, may impose some restrictions on the signalling design. In accordance with a possibility redundant (spare) code point is use in the carrier indicator field (CIF). Localized /distributed Virtual Resource Block (VRB) allocation flag may also be used to switch between DL and combined DL and UL resource allocation. Again, RRC configuration may be used to enable this and correspondingly disable distributed resource allocation (RA). In accordance with a possibility UL transmissions may be coupled with aperiodic sounding reference symbol (SRS) request bit. The SRS trigger in the DL grant may at the same time also trigger an UL data/CQI transmission, thus eliminating a need for a separate trigger. Transmission of aperiodic SRS may be used to trigger the transmission of UL data such as aperiodic CSI. PUCCH TPC bits may also be reinterpreted to be applicable for Physical Uplink Shared Channel (PUSCH) transmit power control (TPC) as well to provide further flexibility to link adaptation.

Additionally, when scheduling UL transmissions with DL assignment some of the UL transmission properties may be fixed. For example, resource block (RB) assignment may be either the same as for the DL or predefined (e.g. higher layer signalling, MAC or RRC). Predefined UL demodulation reference signals cyclic shift (DM RS CS) may be used. No frequency hopping may be applied. Use of a carrier indicator field (CIF) may not be necessary, for example system information block 2 (SIB2) linked UL component carrier (CC) may be used instead. In certain applications downlink assignment indicator (DAI) is not necessary, but the indication may be obtained by reference to a predefined (e.g. the next available) UL subframe. No new data indicator (NDI) may be needed. Instead, only first transmissions or aperiodic CSI only may need to be considered. No multi-cluster transmission. PUCCH transmit power control (TPC) is not always necessary.

A further option is to predefine one or more sets of parameters to be used for transmission of UL-SCH or aperiodic CSI and to have one or more bits in the DL assignment to indicate which set of the parameter should be used.

For the downlink ACK/NACK transmission, the Physical Hybrid ARQ Indicator Channel (PHICH) resource may be derived in a similar manner as in the usual case with UL grant scheduling.

A benefit that may be obtained by at least some of the above embodiments is that allocation of extra physical uplink shared channel (PUSCH) resource on top of downlink allocation can be made efficiently. This enables different scheduler strategies, e.g., such that eNB can utilize more opportunistic allocation of uplink resources instead of waiting for the scheduling request from the UE. This option may especially attractive when the uplink is not fully loaded. This kind of eNB operation may result in reduced end-to-end latency due to the fact that latency components due to sounding reference (SR) and PUSCH allocation may be avoided in certain occasions. It may also be possible to combine a predetermined measurement report, such as buffer status report on the PUSCH resource triggered by means of combined uplink and downlink allocation on the control channel.

It is noted that operation of a user equipment in accordance with the current LTE specifications is such that when the UL data buffer is empty the UE will transmit dummy bits on the allocated PUSCH resource. In accordance with certain embodiment a UE transmits on PUSCH resources only in the case the UE has uplink data in its data buffer. Otherwise the UE transmits only A/N on PUCCH as a response to S-PDCCH. An eNB can perform blind decoding in this specific scenario because A/N is always present (see Figure 5). Hence, eNB can perform blind decoding on the basis of PUCCH only (it is noted that eNB blind decoding from the PUCCH is supported already in LTE Release 8 and upwards). A benefit of this approach is that additional interference to be generated in the network due to "opportunistic PUSCH resource allocation" may be avoided.

It is noted that whilst embodiments have been described in relation to LTE, similar principles can be applied to any other communication system or to further developments with LTE. Also, instead of scheduling that is provided by a control apparatus associated with a base station scheduling may be provided by any apparatus for scheduling transmissions in two directions between at least two devices. For example, this may be the case in application where no fixed equipment provided but a communication system is provided by means of a plurality of user equipment, for example in adhoc networks. Therefore, although certain embodiments were described above by way of example with reference to certain exemplifying architectures for wireless networks, technologies and standards, embodiments may be applied to any other suitable forms of communication systems than those illustrated and described herein.

The required data processing apparatus and functions of a base station apparatus, a communication device and any other appropriate apparatus may be provided by means of one or more data processors. The described functions at each end may be provided by separate processors or by an integrated processor. The data processors may be of any type suitable to the local technical environment, and may include one or more of general purpose computers, special purpose computers, microprocessors, digital signal processors (DSPs), application specific integrated circuits (ASIC), gate level circuits and processors based on multi core processor architecture, as non limiting examples. The data processing may be distributed across several data processing modules. A data processor may be provided by means of, for example, at least one chip. Appropriate memory capacity can also be provided in the relevant devices. The memory or memories may be of any type suitable to the local technical environment and may be implemented using any suitable data storage technology, such as semiconductor based memory devices, magnetic memory devices and systems, optical memory devices and systems, fixed memory and removable memory.

In general, the various embodiments may be implemented in hardware or special purpose circuits, software, logic or any combination thereof. Some aspects of the invention may be implemented in hardware, while other aspects may be implemented in firmware or software which may be executed by a controller, microprocessor or other computing device, although the invention is not limited thereto. While various aspects of the invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof. The software may be stored on such physical media as memory chips, or memory blocks implemented within the processor, magnetic media such as hard disk or floppy disks, and optical media such as for example DVD and the data variants thereof, CD.

The embodiment may provide advantage in reduced downlink control signaling overhead as some of the current UL grants can be omitted. This may be particularly useful when there are several small UL data packets or aperiodic CSI reports to be transmitted simultaneously. More efficient usage for the UL resources may be allowed and PDCCH capacity problem limiting the UL/DL resource usage can be avoided in a cost efficient manner. More flexible usage of especially aperiodic CSI may be allowed. An benefit may be provided in that when DL and UL are scheduled simultaneously the error case related to the discontinuous transmission (DTX) detection of ACK/NACK on Physical Uplink Shared Channel (PUSCH) can be eliminated because the DTX to ACK error is unlikely to appear on PUSCH since the UL and DL scheduling are coupled. This may result in improved coverage for the ACK/NACK signalling. Latency reduction through more opportunistic scheduling for the UL resources may also be allowed.

The foregoing description has provided by way of exemplary and non-limiting examples a full and informative description of the exemplary embodiment of this invention. However, various modifications and adaptations may become apparent to those skilled in the relevant arts in view of the foregoing description, when read in conjunction with the accompanying drawings and the appended claims.

## Claims

1. A method for controlling communications in an uplink direction, comprising:
receiving a downlink assignment, said downlink assignment comprising an indication of resources on which downlink data is to be transmitted, said downlink assignment including an indication of uplink scheduling, said indication providing scheduling of uplink data dynamically;
determining from the downlink assignment, information relating to scheduling of transmissions in an uplink direction;
configuring data transmission in the uplink direction based on the assignment associated with the downlink direction; and
allocating resources according to a predetermined configuration in the uplink direction based on the downlink assignment.

2. A method for controlling communications in an uplink direction, comprising:
determining scheduling for at least one device in the uplink direction, and
sending information relating to the determined scheduling in at least one downlink assignment, said downlink assignment comprising an indication of resources on which downlink data is to be transmitted, said downlink assignment including an indication of uplink scheduling, said indication providing scheduling of uplink data dynamically, said downlink assignment for use in:
configuring of data transmission in the uplink direction by the at least one device; and
allocating resources according to a predetermined configuration in the uplink direction based on the downlink assignment.

3. A method according to claim 1 or 2, wherein the downlink assignment comprises information regarding uplink scheduling and at least one parameter required by the device for receiving data on the downlink and sending data on the uplink.

4. A method according to any preceding claim, comprising: controlling use of physical uplink shared channel and/or physical uplink control channel resources based on the downlink assignment; and communicating the downlink assignment on a physical downlink control channel.

5. A method according to any preceding claim, comprising:
deriving at least one resource allocation parameter related to transmission in the uplink direction from the resource allocation for the downlink direction; and deriving at least one resource allocation parameter related to transmission in the uplink direction from resource allocation for sounding reference symbols.

6. A method according to any preceding claim, comprising providing power control on physical uplink shared channel based on power control of physical uplink control channel.

7. A method according to any preceding claim, comprising:
switching between modes where in a first mode transmissions in the uplink direction are controlled based on the downlink assignment and in a second mode only the downlink direction is controlled based on the downlink assignment; and
switching between different modes based on detection of presence of scheduling information for the uplink direction in the downlink assignment and/or based on radio resource control signalling or medium access control signalling.

8. An apparatus for controlling communications in an uplink direction, the apparatus comprising at least one processor, and at least one memory including computer program code, wherein the at least one memory and the computer program code are configured, with the at least one processor, to:
process a downlink assignment to determine information relating to scheduling of transmissions in the uplink direction, said downlink assignment comprising an indication of resources on which downlink data is to be transmitted, said downlink assignment including an indication of uplink scheduling, said indication providing scheduling of uplink data dynamically;
control configuration for data transmission in the uplink direction based on the assignment associated with the downlink direction; and
allocating resources according to a predetermined configuration in the uplink direction based on the downlink assignment.

9. An apparatus according to claim 8, configured to:
provide at least one resource allocation parameter related to transmission in the uplink direction based on resource allocation for the downlink direction and/or resource allocation for sounding reference symbols,
wherein the data transmission comprises transmission of modulated data and reference signal and, if present, error correction information.

10. An apparatus for controlling communications in an uplink direction, the apparatus comprising at least one processor, and at least one memory including computer program code, wherein the at least one memory and the computer program code are configured, with the at least one processor, to:
determine scheduling for at least one device in the uplink direction, and cause sending of information relating to the determined scheduling in at least one downlink assignment, said downlink assignment comprising an indication of resources on which downlink data is to be transmitted, said downlink assignment including an indication of uplink scheduling, said indication providing scheduling of uplink data dynamically, wherein the downlink assignment comprises an indication of resource allocation for the uplink direction, said downlink assignment for use in:
configuring of data transmission in the uplink direction by the at least one device; and allocating resources according to a predetermined configuration in the uplink direction based on the downlink assignment.

11. An apparatus according to any of claims 8 to 10, configured to process a downlink assignment comprising information regarding uplink scheduling and at least one parameter required by the device for receiving data on the downlink and sending data on the uplink.

12. A communication device comprising apparatus in accordance with claim 8 or any claim dependent on claim 8, and comprising one of a user equipment and a machine-like terminal.

13. A network element comprising an apparatus in accordance with claim 10 or any claim dependent on claim 10.

14. A computer program comprising code means adapted to perform the steps of any of claims 1 to 7 when the program is run on a processor.

## Patentansprüche

1. Verfahren zur Steuerung von Kommunikationen in einer Uplink-Richtung, umfassend:
Empfangen einer Downlink-Zuteilung, wobei die Downlink-Zuteilung eine Indikation von Ressourcen umfasst, auf denen Downlink-Daten zu übertragen sind, wobei die Downlink-Zuteilung eine Indikation eines Uplink-Scheduling beinhaltet, wobei die Indikation ein Scheduling von Uplink-Daten dynamisch bereitstellt;
Bestimmen, aus der Downlink-Zuteilung, von Informationen bezüglich des Scheduling von Übertragungen in einer Uplink-Richtung;
Konfigurieren einer Datenübertragung in der Uplink-Richtung basierend auf der mit der Downlink-Richtung assoziierten Zuteilung; und
Zuweisen von Ressourcen gemäß einer vorbestimmten Konfiguration in der Uplink-Richtung basierend auf der Downlink-Zuteilung.

2. Verfahren zur Steuerung von Kommunikationen in einer Uplink-Richtung, umfassend:
Bestimmen eines Scheduling für mindestens eine Vorrichtung in der Uplink-Richtung, und
Senden von Informationen bezüglich des bestimmten Scheduling in mindestens einer Downlink-Zuteilung, wobei die Downlink-Zuteilung eine Indikation von Ressourcen umfasst, auf denen Downlink-Daten zu übertragen sind, wobei die Downlink-Zuteilung eine Indikation eines Uplink-Scheduling beinhaltet, wobei die Indikation ein Scheduling von Uplink-Daten dynamisch bereitstellt, wobei die Downlink-Zuteilung bei Folgendem zu verwenden ist:
Konfigurieren einer Datenübertragung in der Uplink-Richtung durch die mindestens eine Vorrichtung; und
Zuweisen von Ressourcen gemäß einer vorbestimmten Konfiguration in der Uplink-Richtung basierend auf der Downlink-Zuteilung.

3. Verfahren nach Anspruch 1 oder 2, wobei die Downlink-Zuteilung Informationen bezüglich eines Uplink-Scheduling und mindestens einen Parameter umfasst, der durch die Vorrichtung zum Empfangen von Daten auf dem Downlink und zum Senden von Daten auf dem Uplink benötigt wird.

4. Verfahren nach einem vorangegangenen Anspruch, umfassend: Steuern der Verwendung von Ressourcen eines physischen gemeinsam genutzten Uplink-Kanals und/oder eines physischen Uplink-Steuerkanals basierend auf der Downlink-Zuteilung; und Kommunizieren der Downlink-Zuteilung auf einem physischen Downlink-Steuerkanal.

5. Verfahren nach einem vorangegangenen Anspruch, umfassend:
Herleiten mindestens eines Ressourcenzuweisungsparameters bezüglich der Übertragung in der Uplink-Richtung aus der Ressourcenzuweisung für die Downlink-Richtung; und
Herleiten mindestens eines Ressourcenzuweisungsparameters bezüglich der Übertragung in der Uplink-Richtung aus der Ressourcenzuweisung für Sondierungsreferenzsymbole.

6. Verfahren nach einem vorangegangenen Anspruch, umfassend Bereitstellen einer Leistungssteuerung auf dem physischen gemeinsam genutzten Uplink-Kanal basierend auf einer Leistungssteuerung des physischen Uplink-Steuerkanals.

7. Verfahren nach einem vorangegangenen Anspruch, umfassend:
Umschalten zwischen Modi, wobei in einem ersten Modus Übertragungen in der Uplink-Richtung basierend auf der Downlink-Zuteilung gesteuert werden, und in einem zweiten Modus nur die Downlink-Richtung basierend auf der Downlink-Zuteilung gesteuert wird; und
Umschalten zwischen verschiedenen Modi basierend auf einer Detektion des Vorhandenseins von Scheduling-Informationen für die Uplink-Richtung in der Downlink-Zuteilung und/oder basierend auf einer Funkressourcensteuersignalisierung oder einer Medienzugangssteuersignalisierung.

8. Einrichtung zur Steuerung von Kommunikationen in einer Uplink-Richtung, wobei die Einrichtung mindestens einen Prozessor und mindestens einen Speicher einschließlich Computerprogrammcode umfasst, wobei der mindestens eine Speicher und der Computerprogrammcode, mit dem mindestens einen Prozessor, ausgelegt sind zum:
Verarbeiten einer Downlink-Zuteilung zum Bestimmen von Informationen bezüglich eines Scheduling von Übertragungen in der Uplink-Richtung, wobei die Downlink-Zuteilung eine Indikation von Ressourcen umfasst, auf denen Downlink-Daten zu übertragen sind, wobei die Downlink-Zuteilung eine Indikation eines Uplink-Scheduling beinhaltet, wobei die Indikation ein Scheduling von Uplink-Daten dynamisch bereitstellt;
Steuern einer Konfiguration zur Datenübertragung in der Uplink-Richtung basierend auf der mit der Downlink-Richtung assoziierten Zuteilung; und
Zuweisen von Ressourcen gemäß einer vorbestimmten Konfiguration in der Uplink-Richtung basierend auf der Downlink-Zuteilung.

9. Einrichtung nach Anspruch 8, die ausgelegt ist zum:
Bereitstellen mindestens eines Ressourcenzuweisungsparameters bezüglich der Übertragung in der Uplink-Richtung basierend auf einer Ressourcenzuweisung für die Downlink-Richtung und/oder einer Ressourcenzuweisung für Sondierungsreferenzsymbole,
wobei die Datenübertragung eine Übertragung modulierter Daten und eines Referenzsignals und, falls vorhanden, von Fehlerkorrekturinformationen umfasst.

10. Einrichtung zur Steuerung von Kommunikationen in einer Uplink-Richtung, wobei die Einrichtung mindestens einen Prozessor und mindestens einen Speicher einschließlich Computerprogrammcode umfasst, wobei der mindestens eine Speicher und der Computerprogrammcode, mit dem mindestens einen Prozessor, ausgelegt sind zum:
Bestimmen eines Scheduling für mindestens eine Vorrichtung in der Uplink-Richtung, und
Bewirken des Sendens von Informationen bezüglich des bestimmten Scheduling in mindestens einer Downlink-Zuteilung, wobei die Downlink-Zuteilung eine Indikation von Ressourcen umfasst, auf denen Downlink-Daten zu übertragen sind, wobei die Downlink-Zuteilung eine Indikation eines Uplink-Scheduling beinhaltet, wobei die Indikation ein Scheduling von Uplink-Daten dynamisch bereitstellt, wobei die Downlink-Zuteilung eine Indikation einer Ressourcenzuweisung für die Uplink-Richtung umfasst, wobei die Downlink-Zuteilung bei Folgendem zu verwenden ist:
Konfigurieren einer Datenübertragung in der Uplink-Richtung durch die mindestens eine Vorrichtung; und Zuweisen von Ressourcen gemäß einer vorbestimmten Konfiguration in der Uplink-Richtung basierend auf der Downlink-Zuteilung.

11. Einrichtung nach einem der Ansprüche 8 bis 10, die ausgelegt ist zum Verarbeiten einer Downlink-Zuteilung, die Informationen bezüglich eines Uplink-Scheduling und mindestens einen Parameter umfasst, der durch die Vorrichtung zum Empfangen von Daten auf dem Downlink und zum Senden von Daten auf dem Uplink benötigt wird.

12. Kommunikationsvorrichtung, die eine Einrichtung nach Anspruch 8 oder einem Anspruch in Abhängigkeit von Anspruch 8 umfasst, und entweder ein Benutzergerät oder ein maschinenartiges Endgerät umfasst.

13. Netzelement, das eine Einrichtung nach Anspruch 10 oder einem Anspruch in Abhängigkeit von Anspruch 10 umfasst.

14. Computerprogramm, das Codemittel umfasst, die zum Durchführen der Schritte eines der Ansprüche 1 bis 7 eingerichtet sind, wenn das Programm auf einem Prozessor ausgeführt wird.

## Revendications

1. Procédé pour commander des communications dans une direction de liaison montante, comprenant :
la réception d'une attribution de liaison descendante, ladite attribution de liaison descendante comprenant une indication de ressources sur lesquelles des données de liaison descendante doivent être transmises, ladite attribution de liaison descendante incluant une indication d'une planification de liaison montante, ladite indication fournissant une planification de données de liaison montante de manière dynamique ;
la détermination, à partir de l'attribution de liaison descendante, d'informations se rapportant à une planification de transmissions dans une direction de liaison montante ;
la configuration d'une transmission de données dans la direction de liaison montante sur la base de l'attribution associée à la direction de liaison descendante ; et
l'allocation de ressources en fonction d'une configuration prédéterminée dans la direction de liaison montante sur la base de l'attribution de liaison descendante.

2. Procédé pour commander des communications dans une direction de liaison montante, comprenant :
la détermination d'une planification pour au moins un dispositif dans la direction de liaison montante et
l'envoi d'informations se rapportant à la planification déterminée dans au moins une attribution de liaison descendante, ladite attribution de liaison descendante comprenant une indication de ressources sur lesquelles des données de liaison descendante doivent être transmises, ladite attribution de liaison descendante incluant une indication d'une planification de liaison montante, ladite indication fournissant une planification de données de liaison montante de manière dynamique, ladite attribution de liaison descendante étant destinée à être utilisée :
dans la configuration d'une transmission de données dans la direction de liaison montante par l'au moins un dispositif ; et
dans l'allocation de ressources en fonction d'une configuration prédéterminée dans la direction de liaison montante sur la base de l'attribution de liaison descendante.

3. Procédé selon la revendication 1 ou 2, dans lequel l'attribution de liaison descendante comprend des informations concernant une planification de liaison montante et au moins un paramètre requis par le dispositif pour recevoir des données sur la liaison descendante et pour envoyer des données sur la liaison montante.

4. Procédé selon l'une quelconque des revendications précédentes, comprenant : la commande de l'utilisation de ressources de canal partagé de liaison montante physique et/ou de canal de commande de liaison montante physique sur la base de l'attribution de liaison descendante ; et la communication de l'attribution de liaison descendante sur un canal de commande de liaison descendante physique.

5. Procédé selon l'une quelconque des revendications précédentes, comprenant :
la dérivation d'au moins un paramètre d'allocation de ressources lié à une transmission dans la direction de liaison montante à partir de l'allocation de ressources pour la direction de liaison descendante ; et la dérivation d'au moins un paramètre d'allocation de ressources lié à une transmission dans la direction de liaison montante à partir d'une allocation de ressources pour des symboles de référence de sondage.

6. Procédé selon l'une quelconque des revendications précédentes, comprenant la fourniture d'une commande de puissance sur un canal partagé de liaison montante physique sur la base d'une commande de puissance d'un canal de commande de liaison montante physique.

7. Procédé selon l'une quelconque des revendications précédentes, comprenant :
la commutation entre des modes où, dans un premier mode, des transmissions dans la direction de liaison montante sont commandées sur la base de l'attribution de liaison descendante et, dans un second mode, seule la direction de liaison descendante est commandée sur la base de l'attribution de liaison descendante ; et
la commutation entre différents modes sur la base d'une détection de la présence d'informations de planification pour la direction de liaison montante dans l'attribution de liaison descendante et/ou sur la base d'une signalisation de commande de ressources radio ou d'une signalisation de contrôle d'accès au support.

8. Appareil pour commander des communications dans une direction de liaison montante, l'appareil comprenant au moins un processeur et au moins une mémoire incluant un code de programme d'ordinateur, dans lequel l'au moins une mémoire et le code de programme d'ordinateur sont configurés, avec l'au moins un processeur :
pour traiter une attribution de liaison descendante pour déterminer des informations se rapportant à une planification de transmissions dans la direction de liaison montante, ladite attribution de liaison descendante comprenant une indication de ressources sur lesquelles des données de liaison descendante doivent être transmises, ladite attribution de liaison descendante incluant une indication d'une planification de liaison montante, ladite indication fournissant une planification de données de liaison montante de manière dynamique ;
pour commander une configuration pour une transmission de données dans la direction de liaison montante sur la base de l'attribution associée à la direction de liaison descendante ; et
pour allouer des ressources en fonction d'une configuration prédéterminée dans la direction de liaison montante sur la base de l'attribution de liaison descendante.

9. Appareil selon la revendication 8, configuré :
pour fournir au moins un paramètre d'allocation de ressources lié à une transmission dans la direction de liaison montante sur la base d'une allocation de ressources pour la direction de liaison descendante et/ou d'une allocation de ressources pour des symboles de référence de sondage,
dans lequel la transmission de données comprend une transmission de données modulées et un signal de référence et, si elles sont présentes, d'informations de correction d'erreur.

10. Appareil pour commander des communications dans une direction de liaison montante, l'appareil comprenant au moins un processeur et au moins une mémoire incluant un code de programme d'ordinateur, dans lequel l'au moins une mémoire et le code de programme d'ordinateur sont configurés, avec l'au moins un processeur :
pour déterminer une planification pour au moins un dispositif dans la direction de liaison montante et
pour provoquer l'envoi d'informations se rapportant à la planification déterminée dans au moins une attribution de liaison descendante, ladite attribution de liaison descendante comprenant une indication de ressources sur lesquelles des données de liaison descendante doivent être transmises, ladite attribution de liaison descendante incluant une indication d'une planification de liaison montante, ladite indication fournissant une planification de données de liaison montante de manière dynamique, dans lequel l'attribution de liaison descendante comprend une indication d'une allocation de ressources pour la direction de liaison montante, ladite attribution de liaison descendante étant destinée à être utilisée :
dans la configuration d'une transmission de données dans la direction de liaison montante par l'au moins un dispositif ; et dans l'allocation de ressources en fonction d'une configuration prédéterminée dans la direction de liaison montante sur la base de l'attribution de liaison descendante.

11. Appareil selon l'une quelconque des revendications 8 à 10, configuré pour traiter une attribution de liaison descendante comprenant des informations concernant une planification de liaison montante et au moins un paramètre requis par le dispositif pour recevoir des données sur la liaison descendante et pour envoyer des données sur la liaison montante.

12. Dispositif de communication comprenant un appareil selon la revendication 8 ou n'importe quelle revendication dépendante de la revendication 8 et comprenant l'un d'un équipement utilisateur et d'un terminal semblable à une machine.

13. Élément de réseau comprenant un appareil selon la revendication 10 ou n'importe quelle revendication dépendante de la revendication 10.

14. Programme d'ordinateur comprenant des moyens de code conçus pour réaliser les étapes de l'une quelconque des revendications 1 à 7 lorsque le programme est exécuté sur un processeur.
